# EUROPÄISCHE PATENTSCHRIFT

(11) **EP 2 686 157 B1**
(45) Veröffentlichungstag und Bekanntmachung des Hinweises auf die Patenterteilung: **14.02.2018**
(21) Anmeldenummer: 12710079.0
(22) Anmeldetag: 19.03.2012
(51) Int. Cl.: B29C 70/08, B29C 70/34, B29C 70/46, B29C 70/50, B32B 5/06, B32B 5/26, D04H 13/00, B32B 37/04, B60R 13/08, G10K 11/162

(54) **THERMOPLASTISCH VERFORMBARER VERBUNDWERKSTOFF**
THERMOPLASTICALLY DEFORMABLE COMPOSITE MATERIAL
MATÉRIAU COMPOSITE THERMOPLASTIQUEMENT DÉFORMABLE

(30) Priorität: 18.03.2011 EP 11158864
(43) Veröffentlichungstag der Anmeldung: 22.01.2014
(73) Patentinhaber: Quadrant Plastic Composites AG, 5600 Lenzburg (CH)
(72) Erfinder: KEILBACH, Andreas, 79725 Laufenburg (DE)
(74) Vertreter: Felder, Peter
(86) Internationale Anmeldenummer: PCT/EP2012/054834
(87) Internationale Veröffentlichungsnummer: WO 2012/126897

(56) Entgegenhaltungen:
- EP-A1- 1 902 830
- WO-A1-03/057453
- WO-A1-2006/111037
- WO-A2-2006/048304
- DE-B3-102005 028 627
- DE-U1-202008 010 737

## Beschreibung

### Technisches Gebiet

Die Erfindung betrifft einen thermoplastisch verformbaren Verbundwerkstoff aus einer Kernschicht mit einer Glasfasergewebe-Lage, die beidseitig mit einer Faservlies-Lage vernadelt ist, und mindestens einer Deckschicht, ferner ein Verfahren zur Herstellung dieses Verbundwerkstoffs sowie seine Verwendung.

In der WO 2006/111037 ist ein Verbundwerkstoff beschrieben, der vorzugsweise aus einer Glasfasergewebe-Lage B, die beidseitig mit einer Faservlies-Lage A vernadelt ist, besteht. Dieser Verbundwerkstoff kann beispielsweise im Kraftfahrzeugbereich eingesetzt werden.

Die WO 2006/048304 beschreibt ein Verkleidungsteil für Kraftfahrzeuge, umfassend eine poröse Kernschicht und Deckschichten. Die Kernschicht besteht entweder aus einem porösen Faservlies aus Glasfasern und Polypropylenfasern oder aus einem Kunststoffschaum, die Deckschichten bestehen entweder aus einem mit Glasfasern verstärkten Polypropylen-Faservlies oder aus einer Folie aus Aluminium oder einem hochschmelzenden Kunststoff. Das Verkleidungsteil kann zusätzlich noch eine dünne Abdeckung aus einem Polyethylenterephthalat-Vlies enthalten.

Die EP 1902830 A1 beschreibt ein Verfahren zur Herstellung eines thermoplastisch verformbaren Verbundwerkstoffes, bei dem ein Mischvlies aus Thermoplastfasern und Verstärkungsfasern durch Nadeln verfestigt und anschliessend auf Temperaturen oberhalb der Erweichungstemperatur des Thermoplasten erwärmt und in heissem Zustand verpresst wird. Dabei wird das erwärmte Mischfaservlies ein- oder beidseitig mit einem hydrophobierten Mischfaservlies aus Polyethylenterephthalat- und Polypropylenfasern thermisch verbunden.

Die DE 10 2005 028627 B3 beschreibt ein insbesondere als Hutablage vorgesehenes warmungeformtes Trägerteil, das als Kernschicht ebenfalls ein aus Glasfasern und thermoplastischen Fasern gebildetes Mischfaservlies umfasst, welches mit mindestens einer aus Faservlies hergestellten Deckschicht sowie mindestens einer Dekorschicht vernadelt ist. Die Deckschicht soll insbesondere den störenden Austritt von Glasfasern der Kernschicht verhindern.

Die DE 20 2008 010 737 U1 beschreibt eine Schallschutz-Abschirmung für den Motoren-, Unterboden- und Karosseriebereich von Kraftfahrzeugen. Die Abschirmung weist einen Schichtaufbau mit mindestens einer Glasfaservliesschicht und einer diese abdeckende Faservliesschicht auf.

Die WO 03/057453 A1 beschreibt einen faserverstärkten thermoplastischen Verbundwerkstoff, der mindestens eine Schicht aus einer Thermoplastmatrix und einer Fasermatte oder einem Faservlies aus einem höherschmelzenden Thermoplasten sowie mindestens eine weitere Schicht aus Fasergewebe oder Fasergelege enthält.

Der Erfindung lag nun die Aufgabe zugrunde, einen verbesserten Verbundwerkstoff bereitzustellen, der insbesondere für Motorkapseln geeignet ist und eine hohe Schallabsorption, einen ausreichenden Steinschlagschutz, eine hohe Weiterreissfestigkeit, eine gute Wasser- und Ölbeständigkeit aufweist und mit Flammschutz ausrüstbar ist.

Diese Aufgabe wird durch den erfindungsgemässen Verbundwerkstoff gelöst. Gegenstand der Erfindung ist demzufolge ein thermoplastisch verformbarer poröser Verbundwerkstoff, umfassend eine Kernschicht mit einer Glasfasergewebe-Lage B, die beidseitig mit einer Faservlieslage A verbunden ist, welche Polypropylenfasern (PPF) und Glasfasern (GF) enthält.

Der Verbundwerkstoff ist dadurch gekennzeichnet, dass die Kernschicht mit mindestens einer Deckschicht D in Form eines Vlieses thermisch verbunden ist, welches Polyethylenterephthalat-Fasern (PETF) und PPF enthält, und dass die Deckschicht D einen Luftporengehalt von 1 bis 20 Vol.-% aufweist, wobei die Schichten miteinander miteinander thermisch verbunden und zusätzlich miteinander vernadelt sind.

In einer speziellen Ausführungsform ist zwischen der Kernschicht und der Deckschicht eine Zwischenschicht C in Form eines Vlieses eingelagert, welches GF und PPF enthält.

Die Glasfasergewebe-Lage B hat vorzugsweise ein Flächengewicht von 200 bis 1000 g/m², insbesondere von 400 bis 800 g/m². Die Fasern liegen vorzugsweise als Faserbündel mit einem Titer von 30 bis 3000 tex vor. Das Gewebe kann 4/1 längs/quer balanciert sein, mit Leinwandbindung. Auch 1/1-Balancierung ist möglich. Das Glasfasergewebe verleiht dem Verbundwerkstoff eine hohe Schlag- und Weiterreissfestigkeit.

Die Faservlies-Lagen A bestehen vorzugsweise aus 30 bis 60 Gew.-% GF und 70 bis 40 Gew.-% PPF, insbesondere von 40 bis 55 Gew.-% GF und 60 bis 45 Gew.-% PPF. Ihr Flächengewicht beträgt vorzugsweise 200 bis 2000 g/m², insbesondere 500 bis 1000 g/m². Die Faservlies-Lagen A werden nach dem Krempel- oder Airlay-Verfahren hergestellt, wobei ein endloses Band mit einem Luftporengehalt von vorzugsweise 40 bis 80 Vol.-%, insbesondere von 50 bis 70 Vol.-% erhalten wird.

Die Deckschicht D besteht vorzugsweise aus 20 bis 60 Gew.-% PETF und 80 bis 40 Gew.-% PPF, insbesondere aus 30 bis 50 Gew.-% PETF und 70 bis 50 Gew.-% PPF. Ihr Flächengewicht beträgt vorzugsweise 20 bis 500 g/m², insbesondere 30 bis 300 g/m². Bevorzugt enthält der Verbundwerkstoff beidseitig Deckschichten D, es ist aber auch möglich, nur eine Deckschicht D vorzusehen und auf der anderen Seite eine Polypropylenfolie anzuordnen. Diese Folie ist an die Kernschicht angeschmolzen derart, dass sie gut haftet und gleichzeitig als geschlossene Versiegelungssschicht wirkt.

Die Deckschicht D weist einen Luftporengehalt von bis zu 20 Vol.-%, insbesondere von 1 bis 15 Vol.-% auf. Sie verleiht dem Verbundwerkstoff eine hohe Schallabsorption, einen guten Steinschlagschutz und eine ausreichende Wasser- und Ölbeständigkeit.

Die Zwischenschicht C, die bei der alternativen Ausführungsform zwischen der Kernschicht und den Deckschichten eingelagert ist, enthält vorzugsweise 5 bis 40 Gew.-% GF und 95 bis 60 Gew.-% PPF, insbesondere 10 bis 30 Gew.-% GF und 90 bis 70 Gew.-% PPF. Der Luftporengehalt beträgt vorzugsweise 5 bis 50 Vol.-%, insbesondere 10 bis 30 Vol.-%. Die fakultative Zwischenschicht C verleiht dem Verbundwerkstoff eine gute Steifigkeit und verbesserte Schallabsorption.

Die einzelnen Lagen bzw. Schichten werden thermisch miteinander verbunden und zusätzlich noch durch Vernadeln. Die Nadelung bewirkt eine teilweise Orientierung der Glasfasern in z-Richtung, wodurch bei der späteren Verarbeitung des Verbundwerkstoffs die Rückstellkräfte der Fasern nach der Pressverformung beim Wiedererhitzen zum Fertigteil wirksam werden können. Bei einer bevorzugten Ausführungsform werden zunächst Vliese D und A und das Gewebe B, und ebenso Vliese D und A zusammengefügt, anschliessend werden die beiden so erhaltenen Gefüge miteinander vernadelt. Das vernadelte Gebilde wird dann, z.B. in einem Durchluftofen oder durch IR-Bestrahlung, kurzzeitig, z.B. 30 bis 360 sec lang auf Temperaturen zwischen 180 und 210°C erwärmt, so dass das Polypropylen aufschmilzt. Die Schmelze durchtränkt dabei die Glasfasern und verbindet sie miteinander. Bei einer alternativen Ausführungsform werden zunächst Vliese D, C und A, und ebenso Vliese D und C sowie Vliese A und das Gewebe B zusammengefügt, anschliessend werden die drei so erhaltenen Gefüge miteinander vernadelt. Das vernadelte Gebilde wird dann wie oben beschrieben zum Schmelzen des Polypropylens erwärmt.

Der poröse Verbundwerkstoff wird dann in einem Laminator bei niedrigem Druck verpresst, vorzugsweise 5 bis 60 sec lang bei 0.05 bis 1 bar, beispielsweise in einer Doppelbandpresse oder in einer Kaschiereinrichtung. Infolge der Rückstellkräfte der z-orientierten Glasfasern bleiben die Luftporen weitgehend erhalten. Die einzelnen Massnahmen und Vorgänge beim Erwärmen und Verpressen sind ausführlich in der EP-B 1 868 796 beschrieben. Bei dieser Behandlung im Laminator erhält die geschmolzene Polypropylenmatrix genügend Zeit, sich gut mit den Verstärkungsfasern und den Decklagen zu verbinden, wobei sich die Luftporen und Fasern im Verbundwerkstoff gleichmässig verteilen.

Falls als Alternative zu der einen Deckschicht D eine Polypropylenfolie angebracht werden soll, wird diese nach der Ofenbehandlung beispielsweise in die Doppelbandpresse eingeführt und auf den noch heissen Vlies-Kern bei ca. 180°C, d.h. über dem Schmelzpunkt, oder auf der Aussenseite mittels temperierter Doppelbandpresse bei ca. 150°C, d.h. unter dem Schmelzpunkt, angeschmolzen.

Die erfindungsgemässen, bahnförmigen Verbundwerkstoffe können als Zuschnitt gelagert werden. Sie sind insbesondere zur Herstellung von Automobilaussenteilen geeignet, vor allem für Motorkapseln und als Unterbodenschutz. Dazu werden die Werkstoffe thermoplastisch zu Fertigteilen umgeformt, beispielsweise in zweiteiligen Formen oder durch Tiefziehen. Nach dem Verpressen unter Druck expandiert das Formteil bei den angewandten hohen Temperaturen infolge der Rückstellkräfte der Faserverstärkung wieder, so dass die darin enthaltenen Luftporen auch im Fertigteil ihre akustische Wirksamkeit entfalten können.

In der nachfolgenden Tabelle sind die einzelnen Schichten mit ihrem Aufbau, der Zusammensetzung der Vliese, ihrem Flächengewicht und dem Luftporengehalt aufgeführt. Zum besseren Verständnis sind diejenigen Schichten, die beidseitig angeordnet sein können, durchnummeriert, wobei beispielsweise der Index 1 für oberhalb und der Index 2 für unterhalb der Kernschicht B verstanden werden kann. Die Schichten sind miteinander vernadelt.

**Tabelle: Schichtenaufbau**

| Schicht | Schichtaufbau | Gew.-% GF bzw. PETF | Flächengewicht | Luftporengehalt |
|---|---|---|---|---|
| D1 | PP/PET- Vlies | 30 - 50% PET | 30 - 300 g/m² | 0 - 20% |
| C1* | PP/GF - Vlies | 10 - 30% GF | 200 - 400 g/m² | 10 - 30% |
| A1 | PP/GF - Vlies | 40 - 55% GF | 500 - 1000 g/m² | 50 - 70% |
| B | GF- Gewebe | 100% GF | 400 - 800 g/m² | 0 |
| A2 | PP/GF-Vlies | 40 - 55% GF | 500 - 1000 g/m² | 50 - 70% |
| C2* | PP/GF- Vlies | 10 - 30% GF | 200 - 400 g/m² | 10 - 30% |
| D2* | PP/PET- Vlies | 30 - 50% PET | 30 - 300 g/m² | 0 - 20% |

| | | | | |
|---|---|---|---|---|
| *Die Schichten C1, C2 und D2 sind optional | | | | |

### Steinschlagschutz

Es wurde eine Durchstossprüfung wurde in Anlehnung an die Norm ISO 6603-2 bei Raumtemperatur durchgeführt. Hierfür wurden Probekörper der Dicken 2.0 mm, 4.0 mm und 6.0 mm verwendet. Zur statistischen Absicherung wurden je 9 Probekörper geprüft. Die erfindungsgemässen Probekörper hatten folgenden Aufbau gemäss obiger Bezeichnungsweise (D1- A1 - B - A2 - D2):

| Schicht | Schichtaufbau | Gew.-% | Flächengewicht | Luftporengehalt |
|---|---|---|---|---|
| D1 | PP/PET- Vlies | 30 % PET | 200 g/m² | 10% |
| A1 | PP/GF - Vlies | 40 % GF | 600 g/m² | 60% |
| B | GF- Gewebe | 100% GF | 700 g/m² | 0 |
| A2 | PP/GF-Vlies | 40 % GF | 600 g/m² | 60% |
| D2 | PP/PET- Vlies | 30 % PET | 100 g/m² | 10% |

Die Ergebnisse der Durchstossprüfung lassen sich wie folgt zusammenfassen *:

| Dicke [mm] | Maximale Kraft [N] | Energie [J] bei der maximalen Kraft | Gesamtenergie [J] |
|---|---|---|---|
| 2 | 1'973 (116) | 9.55 (3.43) | 22.84 (1.24) |
| 4 | 1'874 (105) | 9.59 (3.71) | 23.08 (2.09) |
| 6 | 2'046 (226) | 9.89 (2.56) | 24.28 (3.53) |

| | | | |
|---|---|---|---|
| * Standardabweichungen sind in Klammern angegeben | | | |

Die obigen Durchstosswerte, sowohl im vollkonsolidierten Zustand (2.0 mm) wie auch bei einer Dicke von 4.0 mm und 6.0 mm Bereich liegen um über 40% höher als bei vergleichbaren Prüfkörpern ohne Verstärkungsschicht B.

## Patentansprüche

1. Thermoplastisch verformbarer poröser Verbundwerkstoff, umfassend eine Kernschicht mit einer Glasfasergewebe-Lage B, die beidseitig mit einer Faservlies-Lage A verbunden ist, welche Polypropylenfasern (PPF) und Glasfasern (GF) enthält, **dadurch gekennzeichnet, dass** die Kernschicht mit mindestens einer Deckschicht D in Form eines Vlieses thermisch verbunden ist, welches Polyethylenterephthalat-Fasern (PETF) und PPF enthält, und dass die Deckschicht D einen Luftporengehalt von 1 bis 20 Vol.-% aufweist, wobei die Schichten miteinander miteinander thermisch verbunden und zusätzlich miteinander vernadelt sind.

2. Verbundwerkstoff nach Anspruch 1, **dadurch gekennzeichnet, dass** zwischen der Kernschicht und der Deckschicht eine Zwischenschicht C eingelagert ist, welche GF und PPF enthält.

3. Verbundwerkstoff nach Anspruch 1 oder 2, **dadurch gekennzeichnet, dass** die einzelnen Lagen bzw. Schichten folgende Zusammensetzung haben:
A: 30 bis 60 Gew.-% GF und 70 bis 40 Gew.-% PPF,
B: 100 Gew.-% Glasfasergewebe,
gegebenenfalls C: 5 bis 40 Gew.-% GF und 95 bis 60 Gew.-% PPF,
D: 20 bis 60 Gew.-% PETF und 80 bis 40 Gew.-% PPF.

4. Verbundwerkstoff nach einem der Ansprüche 1 bis 3, **dadurch gekennzeichnet, dass** die einzelnen Lagen bzw. Schichten folgende Flächengewichte haben:
A: 200 bis 2000 g/m²,
B: 200 bis 1000 g/m²,
gegebenenfalls C: 100 bis 500 g/m²,
D : 20 bis 500 g/m².

5. Verbundwerkstoff nach einem der Ansprüche 1 bis 4, **dadurch gekennzeichnet, dass** die einzelnen Lagen bzw. Schichten folgenden Porengehalt aufweisen:
A: 40 bis 80 Vol.-%,
gegebenenfalls C: 5 bis 50 Vol.-%,
D: 1 bis 15 Vol.-%.

6. Verbundwerkstoff nach einem der Ansprüche 1 bis 5, **dadurch gekennzeichnet, dass** er nur auf der einen Seite eine Deckschicht D aufweist und auf der anderen Seite eine Polypropylenfolie angeordnet ist.

7. Verfahren zur Herstellung des Verbundwerkstoffs nach Anspruch 1,
**dadurch gekennzeichnet, dass** zunächst Vliese D und A und das Gewebe B, ebenso Vliese D und A zusammengefügt werden, dass anschliessend die beiden so erhaltenen Gefüge miteinander vernadelt werden, und dass schliesslich das vernadelte Gebilde auf Temperaturen zwischen 180 und 210°C erwärmt wird, so dass das Polypropylen aufschmilzt und die Fasern miteinander verbindet.

8. Verfahren zur Herstellung des Verbundwerkstoffs nach Anspruch 2,
**dadurch gekennzeichnet, dass** zunächst Vliese D, C und A, ebenso Vliese D und C, sowie Vlies A und das Gewebe B zusammengefügt werden, dass anschliessend die drei so erhaltenen Gefüge miteinander vernadelt werden, und dass schliesslich das vernadelte Gebilde auf Temperaturen zwischen 180 und 210°C erwärmt wird, so dass das Polypropylen aufschmilzt und die Fasern miteinander verbindet.

9. Verwendung des Verbundwerkstoffs nach den Ansprüchen 1 bis 5 zur Herstellung von Automobilteilen, insbesondere für Motorkapseln und als Unterbodenschutz.

## Claims

1. A thermoplastically deformable porous composite material, comprising a core layer with a glass fiber woven ply B, connected on both sides thereof to a fiber nonwoven ply A which comprises polypropylene fibers (PPF) and glass fibers (GF), **characterized in that** the core layer is thermally connected with at least one cover layer D formed as a nonwoven which comprises polyethylene terephthalate fibers (PETF) and PPF, and that the cover layer D has an air voids content of 1 to 20 vol.-%, wherein the layers are thermally connected to each other and are furthermore needled to each other.

2. The composite material according to claim 1, **characterized in that** between the core layer and the cover layer there is inserted an intermediate layer C which comprises GF and PPF.

3. The composite material according to claim 1 or 2, **characterized in that** the individual layers or plies have the following composition:
A: 30 to 60 wt.-% GF and 70 to 40 wt.-% PPF,
B: 100 wt.-% glass fiber woven,
optionally C: 5 to 40 wt.-% GF and 95 to 60 wt.-% PPF,
D: 20 to 60 wt.-% PETF and 80 to 40 wt.-% PPF.

4. The composite material according to any one of claims 1 to 3, **characterized in that** the individual plies or layers have the following areal weights:
A: 200 to 2000 g/m²,
B: 200 to 1000 g/m²,
optionally C: 100 to 500 g/m²,
D : 20 to 500 g/m².

5. The composite material according to any one of claims 1 to 4, **characterized in that** the individual layers or plies have the following voids contents:
A: 40 to 80 vol.-%,
optionally C: 5 to 50 vol.-%,
D: 1 to 15 vol.-%.

6. The composite material according to any one of claims 1 to 5, **characterized in that** it comprises on only one side thereof a cover layer D and that on the other side thereof there is arranged a polypropylene foil.

7. A method for producing the composite material according to claim 1, **characterized in that** initially nonwovens D and A plus woven B are connected and also nonwovens D and A are connected, that subsequently the two structures thus obtained are needled together, and that finally the needled complex is heated to temperatures between 180 and 210°C thereby causing polypropylene to melt and to link together the fibers.

8. A method for producing the composite material according to claim 2, **characterized in that** initially nonwovens D, C and A are connected and also nonwovens D and C as well as nonwoven A and woven B are connected, that subsequently the three structures thus obtained are needled together, and that finally the needled complex is heated to temperatures between 180 and 210°C thereby causing polypropylene to melt and to link together the fibers.

9. Use of the composite material according to any one of claims 1 to 5 for producing automotive parts, particularly for engine encapsulations and as underbody protection.

## Revendications

1. Matériau composite thermoplastique poreux déformable, comprenant une couche de noyau ayant une strate B d'un tissu de fibres de verre qui est reliée de chaque côté à une strate A d'une nappe de fibres non tissées, qui renferme des fibres de polypropylène (PPF) et des fibres de verre (GF),
**caractérisé en ce que**
la couche de noyau est reliée thermiquement à au moins une couche de recouvrement D sous la forme d'une nappe non tissée qui referme des fibres de polyéthylène téréphtalate (PETF) et des fibres de PPF, et la couche de recouvrement D a une teneur en pores aérés de 1 à 20% en volume, les couches étant reliées thermiquement et en outre liées par aiguilletage.

2. Matériau composite conforme à la revendication 1,
**caractérisé en ce qu'**
entre la couche de noyau et la couche recouvrement est insérée une couche intermédiaire C renfermant des GF et du PPF.

3. Matériau composite conforme à la revendication 1 ou 2,
**caractérisé en ce que**
les différentes strates ou couches ont la composition suivante :
A : 30 à 60 % en poids de GF et 70 à 40 % en poids de PPF,
B : 100 % en poids d'un tissu de fibres de verre,
le cas échéant C : 5 à 40 % en poids de GF et 95 à 60 % en poids de PPF,
D : 20 à 60 % en poids de PETF et 80 à 40 % en poids de PPF.

4. Matériau composite conforme à l'une des revendications 1 à 3,
**caractérisé en ce que**
les différentes strates ou couches ont les poids surfaciques suivantes :
A : 200 à 2000g/m²,
B : 200 à 1000g/m²,
le cas échéant C : 100 à 500g/m²,
D / 20 à 500g/m².

5. Matériau composite conforme à l'une des revendications 1 à 4, **caractérisé en ce que**
les différentes strates ou couches ont la teneur en pores suivante :
A : 40 à 80 % en volume,
le cas échéant C : 5 à 50 % en volume,
D : 1 à 15 % en volume.

6. Matériau composite conforme à l'une des revendications 1 à 5, **caractérisé en ce qu'**
il ne comporte une couche de recouvrement D que sur une face, et un film de polypropylène est positionné sur l'autre face.

7. Procédé d'obtention d'un matériau composite conforme à la revendication 1,
**caractérisé en ce que**
les nappes D et A et le tissu B ainsi que les nappes D et A sont tout d'abord, assemblées, puis les deux structures ainsi obtenues sont liées par aiguilletage, et ensuite le produit aiguilleté est chauffé à des températures comprises 180 et 210 °C de sorte que le polypropylène fonde et lie les fibres les unes aux autres.

8. Procédé d'obtention d'un matériau composite conforme à la revendication 2,
**caractérisé en ce que**
les nappes D, C et A ainsi que les nappes D et C et la nappe A et le tissu B sont tout d'abord, assemblés, puis, les trois structures ainsi obtenues sont liées par aiguilletage, et ensuite les produits aiguilletés sont chauffés à des températures comprises entre 180 et 210 °C de sorte que le polypropylène fonde et lie les fibres entre elles.

9. Utilisation d'un matériau composite conforme aux revendications 1 à 5, pour l'obtention de pièces d'automobiles, en particulier d'enveloppes de moteur ou de protection de bas de caisse.
